# EUROPEAN PATENT SPECIFICATION

(11) **EP 4 533 506 B1**
(45) Date of publication and mention of the grant of the patent: **06.05.2026**
(21) Application number: 23745625.6
(22) Date of filing: 26.05.2023
(51) Int. Cl.: H01H 27/00, H01H 3/16, F16P 3/08

(54) **SAFETY SWITCH FOR ACCESS CONTROL**
SICHERHEITSSCHALTER FÜR ZUGANGSKONTROLLE
INTERRUPTEUR DE SÉCURITÉ POUR CONTRÔLE D'ACCÈS

(30) Priority: 27.05.2022 IT 202200011240
(43) Date of publication of application: 09.04.2025
(73) Proprietor: Pizzato Elettrica S.r.l., 36063 Marostica (Vicenza) (IT)
(72) Inventor: PIZZATO, Marco, 36063 Marostica (VI) (IT); ZONTA, Simone, 36061 Bassano del Grappa (VI) (IT)
(74) Representative: Studio Torta S.p.A.
(86) International application number: PCT/IB2023/055402
(87) International publication number: WO 2023/228135

(56) References cited:
- US-A1- 2011 127 147
- US-A1- 2019 316 381
- US-A1- 2020 165 839

## Description

### Technical Field

The present invention finds application in the field of industrial electrical devices and particularly relates to a safety switch for controlling access to safety barriers or perimeters for industrial machines and plants.

### State of the art

As known, safety switches for controlling accesses to safety barriers and perimeters for industrial machines or plants generally comprise a switching device suitable for being anchored to the fixed part of the access and an actuator device suitable for being anchored to the movable part.

The two devices are adapted to interact with each other when the access is opened and closed to signal the opening/closing condition, as well as locking/unlocking, to the control system of the machine or plant, and allow the control of the machine or plant according to methods that vary according to the adopted configuration.

The interaction between the switching device and the actuator device may be of the mechanical or electromechanical type, wherein the actuator device is provided with a mechanical actuator, for example a key actuator, suitable to be inserted inside the switching device to interact mechanically with the switching means, and of the completely electronic type.

**In** this second case, the interaction between the two devices occurs through the exchange of a presence signal through which it is possible to discriminate the proximity between the two devices, so as to distinguish the opening and closing conditions of the access.

**In** both embodiments, the actuator device may also be provided with a pin which has the function of centering and retaining the actuator device on the switching device, so to prevent access from being opened without prior consent from the central system or from opening following the release thereof due to vibrations or other minimal solicitations not related to an opening attempt.

The pin of the actuator device is usually designed to engage the locking pin of a locking/unlocking mechanism housed in the switching device.

Generally, in electromechanical switches the action is carried out by the key or mechanical actuator itself.

Some solutions also make it possible to detect any breakage of the locking/unlocking mechanism pin in order to prevent the switch from operating even if this event occurs. However, the breakage condition of the locking/unlocking mechanism pin should always be avoided since, in this case, it would still be possible for the integral part of the same locking pin to descend, which could therefore be erroneously detected as correct operation.

JP2002216591 and JP2004079204 discloses a switch which, in a first configuration, has the purpose of avoiding the pin to break by providing a mechanism which prevents to apply thereto, through the traction exerted on the actuating pin, an excessive stress, by means of a series of referral mechanism which allow the applied stress to be dispersed.

However, the constructive complexity of the locking mechanism makes this solution relatively expensive and unreliable.

A safety switch solution which provides that there is no deformation or breakage of the locking pin even in case of excessive stress is also disclosed in JP2007257973.

In a second embodiment of JP2002216591, on the other hand, the access always occurs also in the event of pin breakage. However, the above risk that the system may not detect such an opening condition due to the downward translation of the pin is not prevented.

JP2002216591 and JP200345294 show further solutions which provide that the actuator pin may be released even in the event of deformation or breakage of the locking pin; however, no actions are provided to prevent the descent of the broken or deformed locking pin.

JP2004079190 discloses a safety switch wherein a cam mechanism is provided to intervenes upon detection of an extraction force applied to the actuator having a value greater than a limit value to operate on a locking element acting in turn on the locking pin and producing the opening of the switching means, avoiding damage to the locking pin.

The value of the limit force at which the cam mechanism intervene is established arbitrarily by means of a control element present in the locking element. The publication US2019/316381 describes a safety switch according to the preamble of claim 1.

Other examples of switches provided with a locking mechanism are described in US 2011/127147 and US2020/165839.

### Scope of the invention

The object of the present invention is to overcome the above drawbacks, by providing a safety switch for access control for industrial machines and plants which has features of high efficiency and relative cost effectiveness.

A particular object is to provide an access control safety switch which provides evidence of the application of excessive stresses imparted to the pin of the locking/unlocking mechanism and exceeding a threshold value and which could cause damage to the actuator device itself and/or to the locking/unlocking mechanism.

Yet another particular object is to provide a safety switch for access control which prevents the pin of the locking/unlocking mechanism from moving to the unlocking position of the access even in a damaged condition.

These objects, as well as others which will become more apparent hereinafter, are achieved by a safety switch for access control which, according to claim 1, comprises a switching device housing switching means for controlling one or more control and/or service circuits of the machine or plant, an actuator device suitable to interact with said switching means upon opening/closing of the access for opening/closing one or more of said circuits, a locking/unlocking mechanism housed in said switching device and provided with a locking pin movable thereinto between at least one locking position of the access and at least one unlocking position of the access, an operating pin associated with said actuator device and suitable to interact with said locking pin to retain said actuator device fastened to said switching device.

The switching device houses at least one locking element with controlled deformation mechanically connected to said locking pin and sized to plastically deform without breaking following the application on said locking pin, through said operating pin, of a first deformation stress higher than a predetermined threshold value.

In this way, if an excessive stress is applied to the locking pin, the locking pin itself or the appropriate locking element with controlled deformation will deform without breaking.

The locking pin will thus remain wedged inside the switching device with no possibility that the downstream part of the deformed end may in any case descend and consequently send an unlocking signal of the access.

In this situation, the condition may possibly occur whereby the actuator pin also remains jammed without the possibility of being extracted, generating an error which will prevent the restart of the machine in an unsafe condition or the opening of the access with the machine in motion.

Depending on the position of the locking element with controlled deformation, it will be possible to lock the locking pin even in the lowered position or in an intermediate position.

Also in this case, the condition of safe access within the protection perimeter will be guaranteed, since when the access is closed, the actuator pin cannot be locked by the locking pin, now jammed, generating an error which will prevent the restart of the machine or plant.

Advantageous embodiments of the invention are obtained according to the dependent claims.

### Brief disclosure of the drawings

Further features and advantages of the invention will become more apparent in the light of the detailed description of a preferred but non-exclusive embodiment of the safety switch according to the invention, shown by way of non-limiting example with the aid of the accompanying drawings wherein:
FIG. 1 is a perspective view of the safety switch in an operating configuration corresponding to the closed condition of the access;
FIG. 2 is a sectional view of the safety switch of Fig. 1 in an operative configuration corresponding to the condition with the access during closing or opening;
FIG. 3 is a sectional view of the safety switch of Fig. 1 in an operative configuration corresponding to the closed and locked access condition;
FIG. 4 is a sectional view of the safety switch of Fig. 1 in a operating configuration having the locking pin deformed.

### Best mode of carrying out the invention

With reference to the attached figures, a preferred but not exclusive embodiment of a safety switch according to the invention is illustrated, generally designed to control at least one access for an industrial machine or plant.

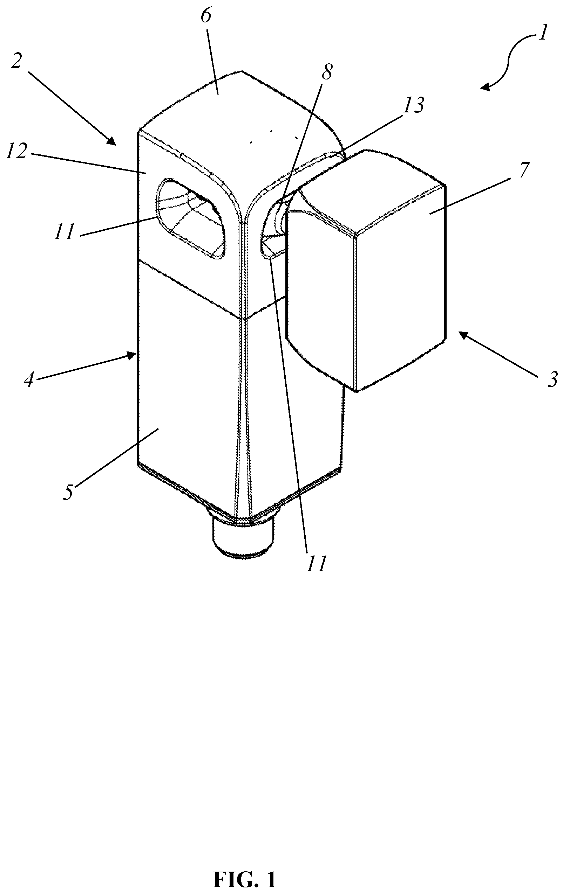

Generally, the safety switch, globally indicated with 1 in Fig. 1, will be designed to be mounted or in any case positioned, preferably but not exclusively, at an access of a protection of the barrier or movable panel type, not shown as known *per se,* suitable for controlling entry and exit from a safety perimeter or other working area wherein an operating machine or industrial plant is positioned, preventing unsafe passages.

Also in a known manner, the main task of the safety switch **1** will be to interrupt the operation of the machine or plant, in an immediate or timed manner, or of one or more selected parts of the machine or plant, in the event of opening of the access or even only in the presence of a request for opening the access.

Access may be of any type, for example both hinged and sliding, right or left-handed, without particular limitations.

In the illustrated configuration, the safety switch **1** is of the electronically actuated type, i.e. provided with a remote communication system between the switching part and the actuation part, as described more clearly below.

However, according to an alternative configuration not shown, the switch **1** may also be mechanically or electromechanically operated with a key actuator, in a technically equivalent or similar manner to what occurs for the above switches.

In its most essential form, the safety switch **1** comprises a switching device **2,** usually adapted to be anchored to a fixed part of the access to be controlled, and an actuator device **3,** adapted to be usually anchored to the movable part of the access.

The methods for anchoring the switching device **2** and the actuator device **3** to the respective parts of the access are of a known type and do not form part of the present invention, therefore they are not described or illustrated in greater detail.

In the illustrated, preferred but not exclusive configuration, the switching device **2** comprises a containment body **4** provided with a casing **5** housing thereinside switching means, not visible in the figures but with known configuration, suitable for being operatively connected to one or more electric and/or electronic circuits for power supply and/or control of the main and/or service and/or emergency circuits of the machine or plant, always in a known manner.

The switching means may be selected from among those commonly used in the sector and may also vary according to the functionality of the safety switch **1,** without particular limitations.

The connection methods of the switching means will be selected between those typical for this type of product and they too will not be described in more detail below.

The casing **5** may also house control means, for example a microprocessor or CPU, not shown, suitable for receiving input signals from the control and/or service circuits through respective communication channels, such as data transmission buses, transistors, electromechanical contacts and the like, to verify their correct operation.

In this way, the control means may command the switching means so that they send an error signal and/or provide for the shutdown of the plant in absence of a communication signal from one of the communication channels or upon detection of malfunctions internal or external to the device.

The casing **5** is also associated with a head **6** designed to interact with the actuator device **3** to allow the interaction of the latter with the switching means, according to methods described below.

The head **6** may be monolithic with the casing **5** or represent a separate module applied to the casing **5,** possibly in a removable manner and/or orientable manner according to two or more positions rotated with respect to the main development axis of the casing **5.**

In turn, the actuator device **3** will comprise an anchoring body **7** provided with its own anchoring means for anchoring to the access and associated with an operating pin **8** having a first end **9** fixed to the anchoring body **7** and a second end **10** projecting transversally from the anchoring body **7** and which will interact with the switching means.

To this end, the head **6** will be provided with one or more slots **11** made in at least one of its front faces **12, 13,** or in one of the upper and/or lower axial faces, to allow the insertion of the operating pin **8** thereinside and the consequent interaction with the switching means.

In the preferred but not exclusive embodiment of the figures, the head **6** will be provided with two or more slots **11** made on corresponding front faces **12, 13** so that the switching device **2** may always be anchored with the same orientation, but still allowing interaction with the actuator device **3,** regardless of the direction of approach of the latter, which instead will depend on the type of closure of the access.

However, it is understood that it will also be possible to provide a single slot **11** associated with a fixed or rotating head **6.**

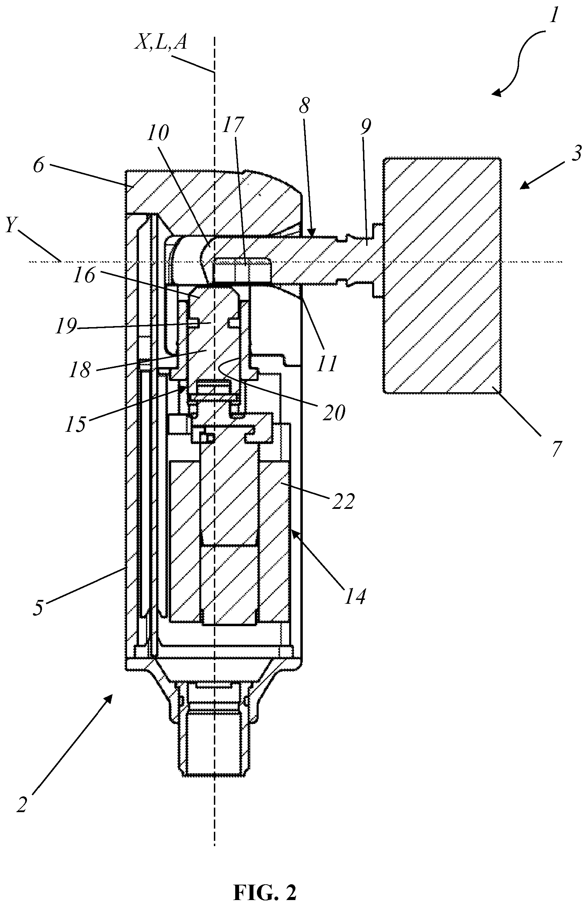

As more clearly visible from the sections of **Figs. 2-4****,** the casing **5** also houses a locking/unlocking mechanism 14 of the operating pin 8 adapted to engage the latter to keep its second end 10 locked when the latter is completely inserted inside the head 6. In the present text, the expression "completely inserted" refers to the position of the operating pin 8 inside the head 6 such as to allow the access to be considered correctly closed.

In particular, the locking/unlocking mechanism 14 is provided with a locking pin 15 movable with a translation or roto-translation movement in the containment body 4 along a predetermined longitudinal movement direction X, substantially parallel to the main development direction L of the casing 5 and orthogonal to the insertion direction Y of the operating pin 8 inside the head 6.

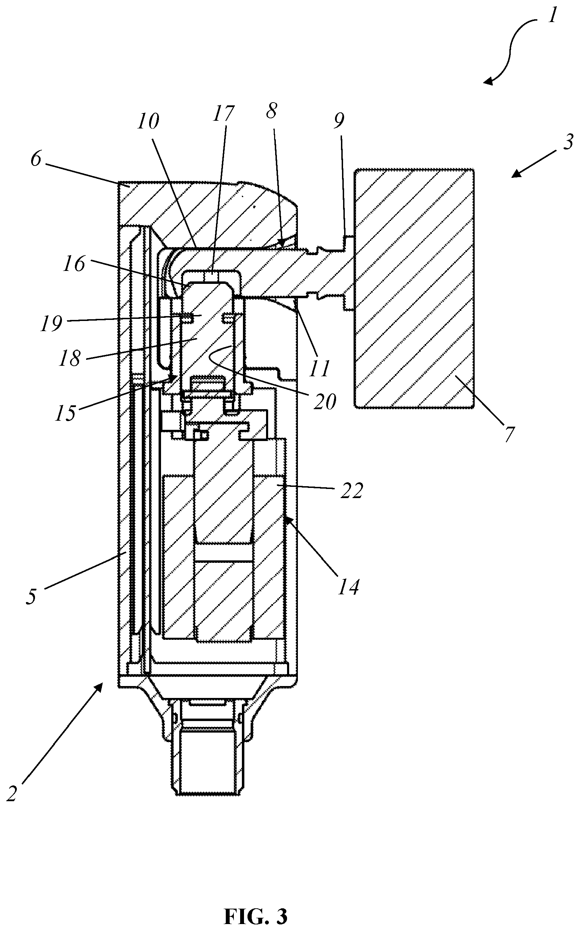

In the unlocked access condition, both in the access opening and closing phases, the operating pin 8 will operate on the locking end 16 of the locking pin 15, which in the figure represents its upper end, to cause its downward translation, as visible in Fig. 2. In particular, the locking pin 15 will be movable in the containment body 4 between at least one unlocking position of the access, wherein its locking end 16 is not inserted in the head 6 or is only partially inserted, and a locking position, visible in Fig. 3, wherein the locking end 16 is completely inserted in the head 6 to engage the operating pin 8 in such a manner to prevent the extraction thereof.

In the unlocked position, the locking end 16 may be completely retracted so as not to interact with the operating pin 8 or, in a preferred manner, it may partially protrude inside the head 6 so as to engage the operating pin 8 in any case, exerting a minimum holding force sufficient to not prevent the opening of the access following the traction exerted by an operator but at the same time sufficient to avoid involuntary openings which may be caused by vibrations or shocks applied to the access.

In the illustrated configuration, preferred but not exclusive, the locking pin 15 will be designed to move between a raised locking position of the access, wherein it engages the operating pin 8 to hold it inside the head 6, and a lowered unlocking position, wherein the operating pin 8 may be extracted from the head 6 upon the application of a transversal stress greater than the holding force exerted by the locking pin 15 and in correspondence with which the opening of the switching means occurs.

Preferably, the operating pin 8 will be provided with a seat 17 for inserting the locking end 16 of the locking pin 15, which seat 17 being arranged in such a position as to be axially aligned with the locking pin **15** when the operating pin 8 is completely inserted inside the head **6.**

The seat **17** may be defined by a concavity, or even by a hole, of a suitable inlet diameter, or even of any other geometric shape for shape coupling, made in the lower face of the second end **10** of the operating pin **8** to allow the at least partial insertion of the upper locking end **16** of the locking pin **15,** such as to prevent access from being opened when the locking/unlocking mechanism **14** is in the locking configuration.

According to a first peculiar aspect of the present invention, the switching device **2** will house a block element with controlled deformation sized to plastically deform upon the application on the locking pin **15** of a first deformation stress higher than a predetermined threshold value through the operating pin **8.**

In a first embodiment, the locking element with controlled deformation will be sized to plastically deform without breaking.

According to a further variant, the locking element with controlled deformation will be sized to deform plastically but a localized breakage may also occur, i.e. such a breakage as to not create the detachment of one of its parts in any case.

The locking element with controlled deformation will be mechanically connected to the locking pin **15,** for example by means of a more or less complex kinematic chain which will allow the stress acting on the locking pin **15** to be transferred to the locking element, or it may be a portion of the locking pin **15.**

Possibly, there may also be several locking elements with controlled deformation, adapted to deform upon the application on the locking pin **15** of respective deformation stresses having values that are not necessarily equal to each other.

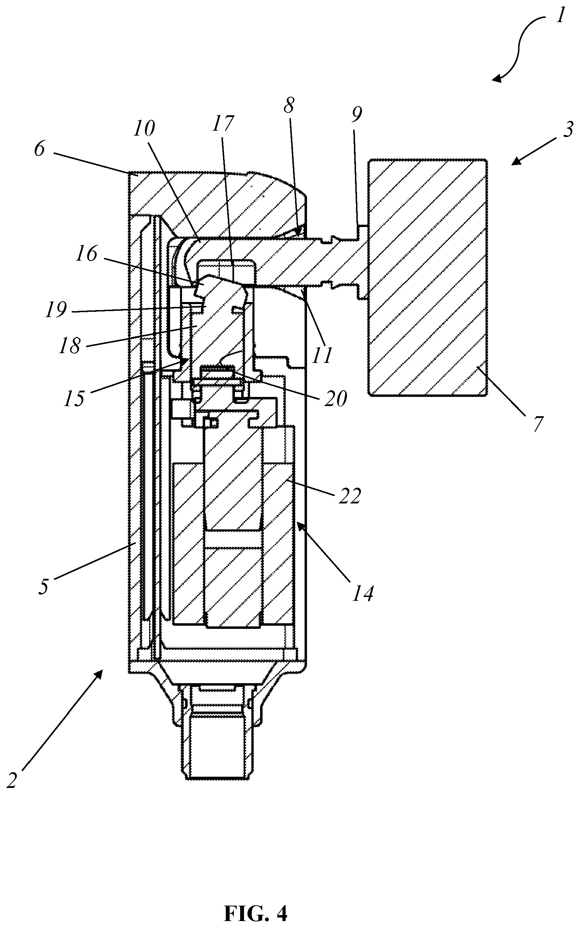

For example, according to the configuration of **Fig. 4****,** the portion of the locking pin **15** suitable to deform in a controlled manner may be its locking end **16.**

The locking pin **15** will comprise a body **18** which extends along a main development axis **A** parallel to its movement direction **X** and is connected to the locking end **16** by a controlled deformation or weakening zone **19.**

Furthermore, the switching device **2** will comprise a longitudinal passage **20** wherein the body **18** of the locking pin **15** will be slidably housed and in an axially aligned position.

The weakening zone **19** may be defined, for example, by a portion of the locking pin **15** with a section reduction, for example with a reduced cross section with respect to the section of the body **18,** so as to define a narrowing allowing the locking end **16** to move from its undeformed position upon the application of the deformation stress.

Alternatively, the weakening zone **19** may be obtained by making one or more notches or other localized structural weakenings of the locking pin **15,** also in correspondence with several deformation sections.

The locking end **16** of the locking pin **15** will preferably be substantially cylindrical-or disc-shaped, possibly with a bevelled edge with an inclined plane to facilitate interaction with the second end **10** of the operating pin **8** during insertion and extraction phases.

The transverse dimension of the locking end **16** will not necessarily correspond to that of the body **18.**

Furthermore, the locking end **16** of the locking pin **15** will be sized to pass, upon the application of the first deformation stress, from an undeformed condition axially aligned with the longitudinal passage to a deformed and misaligned position with respect to axis **A** of the longitudinal passage **20** and such as to bring the locking end **16** into at least partial interference with the inner surface of the longitudinal passage **20.**

By interference it is meant that between the deformed part of the locking pin **15** and the inner surface of the longitudinal passage **20** there will be such a contact as to prevent mutual sliding.

In this way, following the deformation of its locking end **16,** the locking pin **15** may not move towards the unlocked position, as it will remain wedged in the longitudinal passage **20.**

According to a possible but not exclusive embodiment, between the outer lateral surface of the locking end **16** and the inner surface of the longitudinal passage **20** there will be a gap of a few tenths of a millimeter all around the locking end **16,** so that the longitudinal passage **20** also acts as a guide for the sliding of the locking pin **15.**

The switching device **2** will be suitably provided with sensor means inside it suitable for detecting the position of the locking pin **15.**

The typology adopted for the sensor means is not restrictive for the present invention, since sensors of any shape, technology or type may be used.

By way of example, these sensor means could comprise one or more photocells or other sensors of the optical type suitable for detecting the start of travel of the locking pin **15** and/or of the body **18** and possibly also the reaching of the end of travel or intermediate positions.

As an alternative to means of the optical type, different types of sensors may be used, such as magnetic sensors or the like, for example magnetic, RFID, electric sensors or according to any other technology.

The sensor means will be designed to detect, following the door opening signal, the movement of the locking pin **15** and/or of the body **18** and to send an error signal if they do not detect the correct downward stroke, which can be correlated to an error situation which causes the plant to stop.

In this configuration, the operating pin **8,** in addition to have the function of holding and centering element with respect to the switching device **2,** also has the function of an actuator.

In particular, the operating pin **8** will be provided with a first remote communication element of the transmitting or receiving type, not shown since it is known per se, suitable to communicate with a second communication element of the receiving or transmitting type, also not shown, present in the switching device **2** by sending or receiving a presence signal.

For example, the first communication element may be placed peripherally to the seat **17,** possibly incorporated in the second end **10** of the operating pin **8,** while the second communication element will be arranged inside the head **6** so as to communicate with the first communication element when the operating pin **8** is completely inserted in the head **6.**

Alternatively, the first remote communication element may be inserted in the anchoring body **7** and the second remote communication element will instead be in the head **6** or in the casing **5,** with respective positions such as to be at least partially facing in the closed access condition.

According to an alternative variant, the first remote communication element could be of the receiving type for receiving a presence signal sent by the second remote communication element, which will therefore be of the transmitting type.

The receiving element may be an antenna of the RFID (*Radio Frequency Identification*) type configured to receive a remote control signal transmitted by the transmitting element, which may instead be a transponder, when the latter is at the minimum detectable distance from the antenna.

In particular, the transponder may be equipped with an RFID tag with an identification code which will be received by the receiving element and which must be recognized by the control means of the safety assembly, suitably equipped with a CPU, in order to allow the start-up of the machine or plant.

The recognition of the code may be unique or generic, depending on whether a switch with a high or low level of coding is to be created.

Advantageously, the RFID tag will be encoded so that it can be unambiguously recognized by the receiving element and prevent the use of actuator devices other than the one connected to the access, avoiding the risk of unsafe opening of the access.

The recognition of the tag by the antenna will allow the activation of the locking/unlocking mechanism **14.**

For example, an electromagnet **22** or other actuator means of the electromechanical, electric, hydraulic or pneumatic type housed in the casing **5** may be powered or switched off, according to the type of operation, to promote the translation of the locking pin **15** upwards or downwards, according to methods known in the sector and therefore not described in greater detail, so that it enter the seat **17** of the operating pin **8,** locking it inside the head **6,** or promoting its translation downwards to unlock the access.

However, it is understood that the transmitting element may also be of another type, for example with an electromechanical action, such as a key actuator, or operating by means of magnetic or electromagnetic, optical, mechanical, induction, pressure or other types of sensors and consequently the receiving element will adapt to the nature of the transmitting element.

## Claims

1. A safety switch for controlling the access to industrial machines or plants, comprising:
- a switching device **(2)** housing switching means for controlling one or more command and/or service circuits of the machine or plant;
- an actuator device **(3)** adapted to interact with said switching means upon the opening/closing of the access for opening/closing one or more of said circuits;
- a locking/unlocking mechanism **(14)** housed in said switching device **(2)** and provided with a locking pin **(15)** movable in said switching device **(2)** between at least one locking position of the access and at least one unlocking position thereof;
- an operating pin **(8)** associated with said actuator device **(3)** and adapted to interact with said locking pin **(15)** to hold said actuator device **(3)** fastened to said switching device **(2);**
**characterized in that** said switching device houses at least one locking element with controlled deformation, mechanically connected to said locking pin **(15)** and sized to deform plastically upon the application on said locking pin **(15)** by said operating pin **(8),** of a first deformation stress higher than a predetermined threshold value.

2. Safety switch as claimed in claim 1, **characterized in that** said locking element with controlled deformation is a portion of said locking pin **(15).**

3. Safety switch as claimed in claim 2, **characterized in that** said locking pin **(15)** comprises a locking end **(16)** adapted to engage said operating pin **(8)** and defining said locking element with controlled deformation.

4. Safety switch as claimed in claim 3, **characterized in that** said locking pin **(15)** is movable in said switching device **(2)** along a predetermined longitudinal movement direction **(X)** and comprises a body **(18)** which extends along a main development axis **(A)** substantially parallel to said movement direction **(X)** and is connected to said locking end **(16)** by a weakening zone **(19).**

5. Safety switch as claimed in claim 4, **characterized in that** said weakening zone **(19)** is defined by a portion of said locking pin **(15)** having a cross-section smaller than that of said body **(18).**

6. Safety switch as claimed in claim 4 or 5, **characterized in that** said weakening zone **(19)** is defined by one or more areas with section reduction and/or notches made in said locking end **(16)** of said locking pin **(15).**

7. Safety switch as claimed in any claim 4 to 6, **characterized in that** said switching device **(2)** has a longitudinal passage **(20)** wherein said body **(18)** of said locking pin **(15)** is housed slidingly and in an axially aligned position.

8. Safety switch as claimed in claim 7, **characterized in that** said locking end **(16)** of said locking pin **(15)** is substantially cylindrical- or disc-shaped and is sized to move, upon the application of said first deformation stress, from an undeformed condition axially aligned with said longitudinal passage **(20)** to a deformed and misaligned position with respect to the axis **(A)** of said longitudinal passage **(20)** and such as to bring said locking end **(16)** into at least partial interference with the inner surface of said longitudinal passage **(20).**

9. Safety switch as claimed in any preceding claim, **characterized in that** said switching device **(2)** houses sensor means thereinside for detecting the position of said locking pin **(15)** and detecting, upon the sending of a locking or unlocking signal of the access, the movement of said locking pin **(15)** to send an error signal in absence of detection of the correct stroke towards the corresponding locking and unlocking positions of the access.

10. Safety switch as claimed in any preceding claim, **characterized in that** said locking element with controlled deformation of said locking pin **(15)** is sized to deform in such a manner to prevent the extraction of said operating pin **(8)** outside said switching device **(2).**

11. Safety switch as claimed in any preceding claim, **characterized in that** said actuator device **(3)** comprises an anchoring body **(7)** for anchoring to the access and from which said operating pin **(8)** project along a transverse direction **(Y).**

12. Safety switch as claimed in any claim 3 to 11, **characterized in that** said switching device **(4)** comprises a casing **(5)** housing said switching means and a head **(6)** provided with at least one slot **(11)** for the insertion of said operating pin **(8),** said locking pin **(15)** being sized to move said locking end **(16)** between said locking position wherein said locking end **(16)** is completely inserted in said head **(6)** and said unlocking position wherein said locking end **(16)** is not inserted in said head **(6)** or is inserted only partially.

13. Safety switch as claimed in any preceding claim, **characterized in that** said actuator device **(3)** is provided with a first remote communication element of the receiving or transmitting type and wherein said switching device **(2)** is provided with a second remote communication element of the transmitting or receiving type adapted to communicate with said first remote communication element by sending or receiving a presence signal.

## Patentansprüche

1. Sicherheitsschalter zum Steuern des Zugangs zu industriellen Maschinen oder Anlagen, umfassend:
- eine Schaltvorrichtung **(2),** die Schaltmittel zum Steuern eines oder mehrerer Befehls- und/oder Wartungsschaltkreise der Maschine oder Anlage unterbringt;
- eine Aktuatorvorrichtung **(3),** die angepasst ist, um mit den Schaltmitteln beim Öffnen/Schließen des Zugangs zum Öffnen/Schließen eines oder mehrerer der Schaltkreise zusammenzuwirken;
- einen Verriegelungs-/Entriegelungsmechanismus **(14),** der in der Schaltvorrichtung **(2)** untergebracht ist und mit einem Verriegelungsstift **(15)** versehen ist, der in der Schaltvorrichtung **(2)** zwischen mindestens einer Verriegelungsposition des Zugangs und mindestens einer Entriegelungsposition davon bewegbar ist;
- einen Betätigungsstift **(8),** der mit der Aktuatorvorrichtung **(3)** assoziiert ist und dazu angepasst ist, mit dem Verriegelungsstift **(15)** zusammenzuwirken, um die Aktuatorvorrichtung **(3)** an der Schaltvorrichtung **(2)** befestigt zu halten;
**dadurch gekennzeichnet, dass** die Schaltvorrichtung mindestens ein Verriegelungselement mit kontrollierter Verformung unterbringt, das mechanisch mit dem Verriegelungsstift **(15)** verbunden ist und so bemessen ist, dass es sich plastisch verformt, wenn der Betätigungsstift **(8)** eine erste Verformungsbeanspruchung auf den Verriegelungsstift **(15)** aufbringt, die höher als ein vorbestimmter Schwellenwert ist.

2. Sicherheitsschalter nach Anspruch 1, **dadurch gekennzeichnet, dass** das Verriegelungselement mit kontrollierter Verformung ein Abschnitt des Verriegelungsstiftes **(15)** ist.

3. Sicherheitsschalter nach Anspruch 2, **dadurch gekennzeichnet, dass** der Verriegelungsstift **(15)** ein Verriegelungsende **(16)** umfasst, das angepasst ist, mit dem Betätigungsstift **(8)** in Eingriff zu kommen und das Verriegelungselement mit kontrollierter Verformung definiert.

4. Sicherheitsschalter nach Anspruch 3, **dadurch gekennzeichnet, dass** der Verriegelungsstift **(15)** in der Schaltvorrichtung **(2)** entlang einer vorbestimmten Längsbewegungsrichtung **(X)** bewegbar ist und einen Körper **(18)** umfasst, der sich entlang einer Hauptabwicklungsachse **(A)** im Wesentlichen parallel zur Bewegungsrichtung **(X)** erstreckt und durch eine Schwächungszone **(19)** mit dem Verriegelungsende **(16)** verbunden ist.

5. Sicherheitsschalter nach Anspruch 4, **dadurch gekennzeichnet, dass** die Schwächungszone **(19)** durch einen Abschnitt des Verriegelungsstifts **(15)** definiert ist, der einen Querschnitt aufweist, der kleiner als der des Körpers **(18)** ist.

6. Sicherheitsschalter nach Anspruch 4 oder 5, **dadurch gekennzeichnet, dass** die Schwächungszone **(19)** durch einen oder mehrere Bereiche mit Querschnittsverringerung und/oder Kerben, die in dem Verriegelungsende **(16)** des Verriegelungsstiftes **(15)** ausgebildet sind, definiert ist.

7. Sicherheitsschalter nach einem der Ansprüche 4 bis 6, **dadurch gekennzeichnet, dass** die Schaltvorrichtung **(2)** einen Längsdurchgang **(20)** aufweist, in dem der Körper **(18)** des Verriegelungsstiftes **(15)** gleitend und in einer axial ausgerichteten Position untergebracht ist.

8. Sicherheitsschalter nach Anspruch 7, **dadurch gekennzeichnet, dass** das Verriegelungsende **(16)** des Verriegelungsstifts **(15)** im Wesentlichen zylindrisch oder scheibenförmig ist und so bemessen ist, dass es sich beim Aufbringen der ersten Verformungsbeanspruchung aus einem unverformten Zustand, der axial mit dem Längsdurchgang **(20)** ausgerichtet ist, in eine verformte und falsch ausgerichtete Position in Bezug auf die Achse **(A)** des Längsdurchgangs **(20)** bewegt und zwar so, dass das Verriegelungsende **(16)** zumindest teilweise zur Interferenz mit der Innenfläche des Längsdurchgangs **(20)** gebracht wird.

9. Sicherheitsschalter nach einem der vorhergehenden Ansprüche, **dadurch gekennzeichnet, dass** die Schaltvorrichtung **(2)** darin Sensormittel zum Erfassen der Position des Verriegelungsstifts **(15)** und zum Erfassen, beim Senden eines Verriegelungs-oder Entriegelungssignals des Zugangs, der Bewegung des Verriegelungsstifts **(15)** unterbringt, um ein Fehlersignal zu senden, wenn der korrekte Hub in Richtung der entsprechenden Verriegelungs- und Entriegelungspositionen des Zugangs nicht erfasst wird.

10. Sicherheitsschalter nach einem der vorhergehenden Ansprüche, **dadurch gekennzeichnet, dass** das Verriegelungselement mit kontrollierter Verformung des Verriegelungsstiftes **(15)** so bemessen ist, dass es sich so verformt, dass ein Herausziehen des Betätigungsstiftes **(8)** aus der Schaltvorrichtung **(2)** verhindert wird.

11. Sicherheitsschalter nach einem der vorhergehenden Ansprüche, **dadurch gekennzeichnet, dass** die Aktuatorvorrichtung **(3)** einen Verankerungskörper (7) zur Verankerung am Zugang umfasst und von dem der Betätigungsstift **(8)** entlang einer Querrichtung **(Y)** vorsteht.

12. Sicherheitsschalter nach einem der Ansprüche 3 bis **11, dadurch gekennzeichnet, dass** die Schaltvorrichtung **(4)** ein Gehäuse **(5),** in dem die Schaltmittel untergebracht sind und einen mit mindestens einem Schlitz **(11)** zum Einführen des Betätigungsstiftes **(8)** versehenen Kopf **(6)** umfasst, wobei der Verriegelungsstift **(15)** so bemessen ist, dass er das Verriegelungsende **(16)** zwischen der Verriegelungsposition, in der das Verriegelungsende **(16)** vollständig in den Kopf **(6)** eingeführt ist, und der Entriegelungsposition, in der das Verriegelungsende **(16)** nicht oder nur teilweise in den Kopf **(6)** eingeführt ist, bewegt.

13. Sicherheitsschalter nach einem der vorhergehenden Ansprüche, **dadurch gekennzeichnet, dass** die Aktuatorvorrichtung **(3)** mit einem ersten Fernkommunikationselement des Empfangs- oder Sendetyps versehen ist und wobei die Schaltvorrichtung **(2)** mit einem zweiten Fernkommunikationselement des Sende- oder Empfangstyps versehen ist, das angepasst ist, um mit dem ersten Fernkommunikationselement durch Senden oder Empfangen eines Anwesenheitssignals zu kommunizieren.

## Revendications

1. Interrupteur de sécurité pour contrôler l'accès à des machines ou installations industrielles, comprenant :
- un dispositif de commutation **(2)** logeant des moyens de commutation pour contrôler un ou plusieurs circuits de commande et/ou de service de la machine ou de l'installation ;
- un dispositif actionneur **(3)** adapté pour interagir avec lesdits moyens de commutation lors de l'ouverture/la fermeture de l'accès pour ouvrir/fermer un ou plusieurs desdits circuits ;
- un mécanisme de verrouillage/déverrouillage **(14)** logé dans ledit dispositif de commutation **(2)** et pourvu d'une broche de verrouillage **(15)** mobile dans ledit dispositif de commutation **(2)** entre au moins une position de verrouillage de l'accès et au moins une position de déverrouillage de celui-ci ;
- une broche d'actionnement **(8)** associée audit dispositif actionneur **(3)** et adaptée pour interagir avec ladite broche de verrouillage **(15)** afin de maintenir ledit dispositif actionneur **(3)** fixé audit dispositif de commutation **(2)** ;
**caractérisé en ce que** ledit dispositif de commutation contient au moins un élément de verrouillage à déformation contrôlée, relié mécaniquement à ladite broche de verrouillage **(15)** et dimensionné pour se déformer plastiquement lors de l'application sur ladite broche de verrouillage **(15)** par ladite broche d'actionnement **(8),** d'une première contrainte de déformation supérieure à une valeur seuil prédéterminée.

2. Interrupteur de sécurité selon la revendication 1, **caractérisé en ce que** ledit élément de verrouillage à déformation contrôlée est une partie de ladite broche de verrouillage **(15).**

3. Interrupteur de sécurité selon la revendication 2, **caractérisé en ce que** ladite broche de verrouillage **(15)** comprend une extrémité de verrouillage **(16)** adaptée pour se mettre en prise avec ladite broche d'actionnement **(8)** et définissant ledit élément de verrouillage à déformation contrôlée.

4. Interrupteur de sécurité selon la revendication 3, **caractérisé en ce que** ladite broche de verrouillage **(15)** est mobile dans ledit dispositif de commutation **(2)** le long d'une direction de mouvement longitudinal **(X)** prédéterminée et comprend un corps **(18)** qui s'étend le long d'un axe de développement principal **(A)** sensiblement parallèle à ladite direction de mouvement **(X)** et est relié à ladite extrémité de verrouillage **(16)** par une zone de faiblesse **(19).**

5. Interrupteur de sécurité selon la revendication 4, **caractérisé en ce que** ladite zone de faiblesse **(19)** est définie par une partie de ladite broche de verrouillage **(15)** ayant une section transversale plus petite que celle dudit corps **(18).**

6. Interrupteur de sécurité selon la revendication 4 ou 5, **caractérisé en ce que** ladite zone de faiblesse **(19)** est définie par une ou plusieurs zones à réduction de section et/ou d'encoches réalisées dans ladite extrémité de verrouillage **(16)** de ladite broche de verrouillage **(15).**

7. Interrupteur de sécurité selon l'une quelconque des revendications 4 à 6, **caractérisé en ce que** ledit dispositif de commutation **(2)** comporte un passage longitudinal **(20)** dans lequel ledit corps **(18)** de ladite broche de verrouillage **(15)** est logé de manière coulissante et dans une position alignée axialement.

8. Interrupteur de sécurité selon la revendication 7, **caractérisé en ce que** ladite extrémité de verrouillage **(16)** de ladite broche de verrouillage **(15)** est sensiblement cylindrique ou discoïdale et est dimensionnée pour se déplacer, lors de l'application de ladite première contrainte de déformation, d'une condition non déformée alignée axialement avec ledit passage longitudinal **(20)** à une position déformée et désalignée par rapport à l'axe **(A)** dudit passage longitudinal **(20)** et de manière à amener ladite extrémité de verrouillage **(16)** dans une interférence au moins partielle avec la surface intérieure dudit passage longitudinal **(20).**

9. Interrupteur de sécurité selon l'une quelconque des revendications précédentes, **caractérisé en ce que** ledit dispositif de commutation **(2)** loge des moyens de détection à l'intérieur pour détecter la position de ladite broche de verrouillage **(15)** et détecter, lors de l'envoi d'un signal de verrouillage ou de déverrouillage de l'accès, le mouvement de ladite broche de verrouillage **(15)** pour envoyer un signal d'erreur en l'absence de détection de la course correcte vers les positions de verrouillage et de déverrouillage correspondantes de l'accès.

10. Interrupteur de sécurité selon l'une quelconque des revendications précédentes, **caractérisé en ce que** ledit élément de verrouillage à déformation contrôlée de ladite broche de verrouillage **(15)** est dimensionné pour se déformer de manière à empêcher l'extraction de ladite broche d'actionnement **(8)** à l'extérieur dudit dispositif de commutation **(2).**

11. Interrupteur de sécurité selon l'une quelconque des revendications précédentes, **caractérisé en ce que** ledit dispositif actionneur **(3)** comprend un corps d'ancrage **(7)** pour l'ancrage à l'accès et à partir duquel ladite broche d'actionnement **(8)** fait saillie le long d'une direction transversale **(Y).**

12. Interrupteur de sécurité selon l'une quelconque des revendications 3 à 11, **caractérisé en ce que** ledit dispositif de commutation **(4)** comprend un boîtier **(5)** logeant lesdits moyens de commutation et une tête **(6)** pourvue d'au moins une fente **(11)** pour l'insertion de ladite broche d'actionnement **(8),** ladite broche de verrouillage **(15)** étant dimensionnée pour déplacer ladite extrémité de verrouillage **(16)** entre ladite position de verrouillage dans laquelle ladite extrémité de verrouillage **(16)** est complètement insérée dans ladite tête **(6)** et ladite position de déverrouillage dans laquelle ladite extrémité de verrouillage **(16)** n'est pas insérée dans ladite tête **(6)** ou n'y est insérée que partiellement.

13. Interrupteur de sécurité selon l'une quelconque des revendications précédentes, **caractérisé en ce que** ledit dispositif actionneur **(3)** est pourvu d'un premier élément de communication à distance du type récepteur ou émetteur et dans lequel ledit dispositif de commutation **(2)** est pourvu d'un second élément de communication à distance du type émetteur ou récepteur adapté pour communiquer avec ledit premier élément de communication à distance en envoyant ou en recevant un signal de présence.
